# EUROPÄISCHE PATENTANMELDUNG

(11) **EP 1 533 184 A1**
(43) Veröffentlichungstag der Anmeldung: **25.05.2005**
(21) Anmeldenummer: 04026020.0
(22) Anmeldetag: 03.11.2004
(51) Int. Cl.: B60R 5/00, B60N 2/46

(54) **Transportbehälter-Einrichtung für Fahrzeuge**

(30) Priorität: 19.11.2003 DE 10354162
(71) Anmelder: BOS GmbH & Co. KG, 73760 Ostfildern (DE)
(72) Erfinder: Sitzler, Wolfgang, 42111 Wuppertal (DE); Salewski, Jürgen, 40599 Düsseldorf (DE); Reisinger, Alexander, 40764 Langenfeld (DE)
(74) Vertreter: Patentanwälte Ostriga, Sonnet, Wirths & Roche

(57) **Zusammenfassung**

Dargestellt und beschrieben ist eine Transportbehälter-Einrichtung (10) für Fahrzeuge wie z.B. Durchladeeinrichtung, insbesondere für den sitzlehnen- oder kofferraumwandseitigen Einbau in Personenkraftwagen, mit einem fahrzeugfesten Halterahmen (11), der mindestens einen Einführkanal begrenzt, in den ein Einbaurahmen (15) eines Transportbehälters (36), wie eines Skisacks od. dgl., durch eine Einführöffnung des Einführkanals hindurch einsetzbar ist, wobei der Einbaurahmen (15) an dem Halterahmen (11) in einer Montageposition lösbar festlegbar ist, und wobei das Transportbehältnis (36) ein Deckelelement (28) aufweist, dem eine Funktionseinheit, wie Spielkonsole, DVD-Player, Becherhalte od. dgl. zugeordnet ist.

## Beschreibung

Die Erfindung betrifft eine Transportbehälter-Einrichtung für Fahrzeuge.

Eine Transportbehälter-Einrichtung für Fahrzeuge ist aus der DE 101 32 081 A1 bekannt. Gemäß dem dort in den Figuren dargestellten Ausführungsbeispiel handelt es sich um eine Durchladeeinrichtung zur Anbringung an einer Fond-Sitzlehne. Das Transportbehältnis ist als Skisack-Aufnahmemodul ausgebildet und weist einen Aufnahmeraum für einen zusammengefalteten Skisack auf.

Das Transportbehältnis ist im wesentlichen quaderförmig ausgebildet und durch eine im wesentlichen rechteckige Einführöffnung in dem fahrzeugseitig festgelegten Halterahmen in diesen hinein einführbar. Der Halterahmen stellt einen axial recht kurz gehaltenen Einführkanal bereit. Die Einführbewegung ist im wesentlichen einer Schwenkbewegung nachgebildet, wobei Werkstoffbereiche des Halterahmens und Werkstoffbereiche des Einbaurahmens gemeinsam ein Schwenklager bilden. Im Fußbereich des Einbaurahmens ist eine Anschlagfläche A vorgesehen, die mit einer halterahmenseitigen Gegenanschlagfläche GA bei in Montageposition befindlichem Einbaurahmen zusammenwirkt. Im Kopfbereich des Einbaurahmens, also im Bereich seines oberen Querschenkels, ist ein manuell verlagerbares Riegelelement vorgesehen, mittels welchem das Transportbehältnis mit seinem Einbaurahmen lösbar an dem fahrzeugseitigen Halterahmen festlegbar ist.

Die Transportbehälter-Einrichtung des Standes der Technik hat sich im vielfachen Einsatz bewährt. Es besteht jedoch das Bedürfnis und damit die der Erfindung zugrundeliegende Aufgabe, die bekannte Transportbehälter-Einrichtung derart weiter zu entwickeln, dass sie variabler ausgebildet ist.

Die Erfindung löst diese Aufgabe mit den Merkmalen des Anspruches 1.

Hiernach wird eine Transportbehälter-Einrichtung für Fahrzeuge, wie z.B. Durchladeeinrichtung, insbesondere für den sitzlehnen- oder kofferraumwandseitigen Einbau in Personenkraftwagen bereitgestellt, mit einem fahrzeugfesten Halterahmen, der mindestens einen Einführkanal begrenzt, in den ein Einbaurahmen eines Transportbehälters, wie eines Skisacks od. dgl., durch eine Einführöffnung des Einführkanals hindurch einsetzbar ist, wobei der Einbaurahmen an dem Halterahmen in einer Montageposition lösbar festlegbar ist, und wobei das Transportbehältnis ein Deckelelement aufweist, dem eine Funktionseinheit, wie Spielkonsole, DVD-Player, Becherhalte od. dgl. zugeordnet ist.

Das Prinzip der Erfindung besteht somit im wesentlichen darin, dass aus der DE 101 32 081 A1 bekannte Modul derart weiterzubilden, dass das Deckelelement als Trägerplatte für eine beliebige Funktionseinheit ausgebildet ist oder zur Anbringung einer solchen Trägerplatte dienen kann. Auf diese Weise kann beispielsweise eine Funktionseinheit, beispielsweise ein Becherhalter, fest mit dem Deckelelement verbunden sein und gemeinsam, für den Fall, dass das Deckelelement schwenkbar ausgebildet ist, mit dem Deckelelement verschwenkt werden. Die Funktionseinheit ist auf diese Weise komfortabel zwischen einer exponierten Gebrauchsposition, in der sie beispielsweise von in dem Passagierraum des Fahrzeugs angeordneten Passagieren frei zugänglich ist, und einer Aufbewahrungsposition, in der sie in dem Innenraum des Transportbehältnisses befindlich ist, verlagerbar.

Die Funktionseinheit kann auch verlagerbar an dem Deckelelement angeordnet sein. Beispielsweise kommt eine Verstelleinrichtung für die Funktionseinheit nach Art einer Schienenanordnung oder einer Schwenkanordnung für die Funktionseinheit an dem Deckelelement infrage.

Vorteilhafterweise ist dem Transportbehältnis, insbesondere dessen Einbaurahmen, ein verlagerbares Riegelelement zugeordnet, welches mit dem Halterahmen zusammenwirken kann und auf diese Weise das Transportbehältnis lösbar an dem Halterahmen festlegen kann.

Vorteilhafterweise ist ein Innenraum des Transportbehältnisses von dem Deckelelement verschließbar. Dies ermöglicht eine besonders einfache Ausgestaltung und Handhabung der Transportbehälter-Einrichtung.

Als Funktionseinheit im Sinne der Erfindung wird jede Einrichtung angesehen, die eine besondere Funktion bereitstellen kann. Neben den erwähnten elektronischen Geräten kommen beispielsweise auch Kühlmodule, Staufächer, Armlehnen etc. in Betracht.

Die erfindungsgemäße Transportbehälter-Einrichtung ermöglicht die Übernahme des aus der deutschen Patentanmeldung DE 101 32 081 A1 bekannten Prinzips einer Einführ-Schwenkbewegung das Transportbehältnis relativ zum Halterahmen, ohne dass wesentliche Bauelemente des Halterahmens und des Einbaurahmens geändert werden müssten.

Weitere Vorteile der Erfindung ergeben sich anhand der nun folgenden Beschreibung von in den Zeichnungen dargestellten Ausführungsbeispielen. Darin zeigen:
- Fig. 1: ein erstes Ausführungsbeispiel der erfindungsgemäßen Transportbehälter-Einrichtung mit einem einen Becherhalter bereitstellenden Deckelelement, in perspektivischer Vorderansicht,
- Fig. 2: ein zweites Ausführungsbeispiel der erfindungsgemäßen Transportbehälter-Einrichtung in perspektivischer Rückansicht mit einem Deckelelement, welches eine gesonderte, schwenkbar zu dem Deckelelement angeordnete Montageplatte oder Trägerplatte für eine Funktionseinheit aufweist,
- Fig. 3: ein drittes Ausführungsbeispiel der erfindungsgemäßen Transportbehälter-Einrichtung in perspektivischer Rückansicht, mit einem Deckelelement, dem eine Schienenanordnung zur Axialverlagerung einer Montageplatte für eine Funktionseinheit zugeordnet ist, und
- Fig. 4: ein viertes Ausführungsbeispiel der erfindungsgemäßen Transportbehälter-Einrichtung in Montageposition in schematischer Querschnittsansicht.

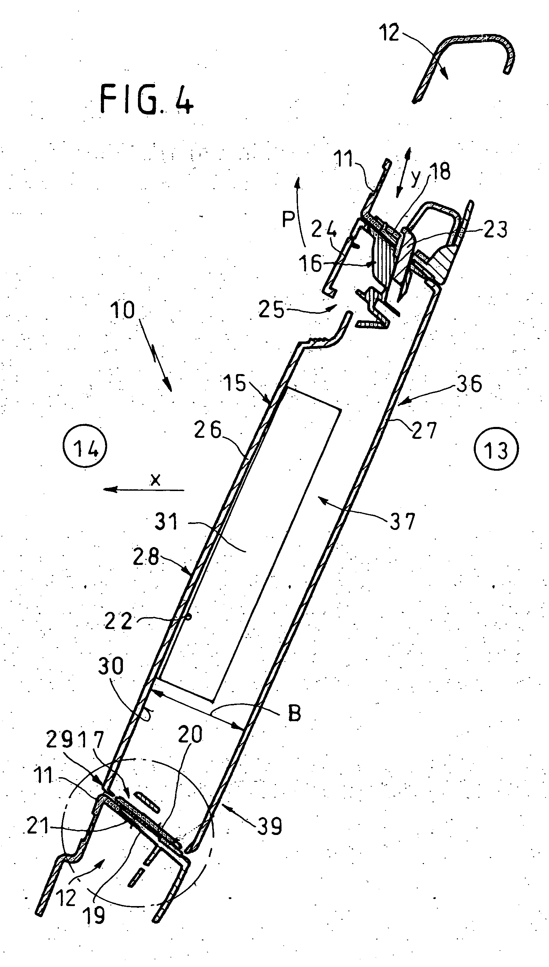

Die in den Figuren in ihrer Gesamtheit mit 10 bezeichnete Transportbehälter-Einrichtung soll zunächst anhand des Ausführungsbeispiels der Fig. 4 erläutert werden, die einer Darstellung der Fig. 12 der DE 101 32 081 A1 entspricht. Um Wiederholungen zu vermeiden, wird der Inhalt der DE 101 32 081 A1 in den Inhalt der vorliegenden Patentanmeldung mit eingeschlossen.

Die erfindungsgemäße Transportbehälter-Einrichtung 10 umfasst einen fahrzeugfesten Halterahmen 11, der fest an einer Lehnenstruktur 12 einer Kfz-Fondlehne eines Kraftfahrzeuges angeordnet ist. Die Kfz-Fondlehne 12 trennt einen Laderaum 13 von einem Passagierraum 14 des Kraftfahrzeuges. Das Kraftfahrzeug ist in Fahrtrichtung x bewegbar.

Die Lehne 12 erstreckt sich bezüglich Fig. 4 weiter nach rechts oben. Lediglich sehr schematisch sind Bestandteile der Lehnenstruktur dargestellt.

Der fahrzeugfest angeordnete Halterahmen 11 ist im wesentlichen rechteckartig ausgebildet. Demzufolge sind zwei horizontale und zwei vertikale Rahmenschenkel vorgesehen, die in den Zeichnungen nicht dargestellt sind. Insgesamt umgibt der Halterahmen 11 eine im wesentlichen rechteckförmige Öffnung, die dem Einführen eines Transportbehältnisses 36 dient. Das Transportbehältnis 36 weist einen ebenfalls im wesentlichen rechteckförmigen Einbaurahmen 15 auf, der mit seinen Außenmaßen auf die Innenmaße des Halterahmens 11 angepasst ist. Im Kopfbereich 16 des Einbaurahmens 15 ist ein entlang der Richtung des Doppelpfeiles y verlagerbares Riegelelement 23 angeordnet, welches mit einer Ausnehmung im Kopfbereich 18 des Halterahmens 11 zusammenwirkt. Das Riegelelement 23 ist über ein verschwenkbares Betätigungselement 24, welches über eine Griffmulde 25 zugänglich ist, betätigbar.

Gleichermaßen wie in der DE 101 32 081 A1 beschrieben, kann das Transportbehältnis 36 in den fahrzeugfesten Halterahmen 11 mittels einer Schwenkbewegung eingesetzt werden. Hierfür sind nicht dargestellte Schwenklagerbereiche am Halterahmen 11 bzw. am Einbaurahmen 15 vorgesehen, die eine Verschwenkung des Transportbehältnisses 36 etwa um eine mit 22 bezeichnete Schwenkachse während der Einsetzbewegung des Transportbehältnisses 36 ermöglichen.

Gemäß dem Ausführungsbeispiel der Fig. 4 wird das Transportbehältnis 36 zunächst entgegen der Fahrtrichtung x an die fahrzeugfesten Schwenklagerbereiche im Bereich der Schwenkachse 22 herangebracht und derartig im Uhrzeigersinn um die Schwenkachse 22 herum verschwenkt, bis der Fußbereich 17 des Einbaurahmens 15 mit seiner Außenumfangsfläche 21 an der Innenumfangsfläche 20 des Fußbereiches 19 des Halterahmens 11 anliegt. Sobald ein Anschlagen der Flächen 20, 21 erfolgt ist, kann das Riegelelement 23 einschnappen oder in seine Sperrposition verlagert werden.

Das Transportbehältnis 36 ist auf diese Weise lösbar an dem fahrzeugseitigen Halterahmen 11 festgelegt.

Das Transportbehältnis 36 weist eine vordere Wand 26 und eine hintere Wand 27 auf, die gemeinsam mit dem Halterahmen 15 einen Aufnahmeraum 37 des Transportbehältnisses begrenzen. Die Vorderwand 36 wird von einem Deckelelement 28 gebildet, welches durch eine im Bereich 29 angeordnete Schwenkachse verschwenkbar ist. Das Deckelelement 28, also die Vorderwand 26 kann ausgehend von einer Position gemäß Fig. 4 entgegen dem Uhrzeigersinn um die Schwenkachse 29 verschwenkt werden, um Zugang zu dem Aufnahmeraum 37 zu ermöglichen. Hierzu kann ein dem Deckelelement zugeordnetes, nicht dargestelltes weiteres Betätigungselement vorgesehen sein, welches mit einem nicht dargestellten, weiteren Riegelelement kooperiert, um das Deckelelement in seiner Sperrstellung gemäß Fig. 4 arretieren. Das Betätigungselement am Deckelelement ist insbesondere im Kopfbereich 16 des Einbaurahmens angeordnet, also entfernt von der Schwenkachse 29. Das Deckelelement ist mit seinem der Schwenkachse 29 fernen Bereich an dem Kopfbereich 16 des Einbaurahmens lösbar festlegbar.

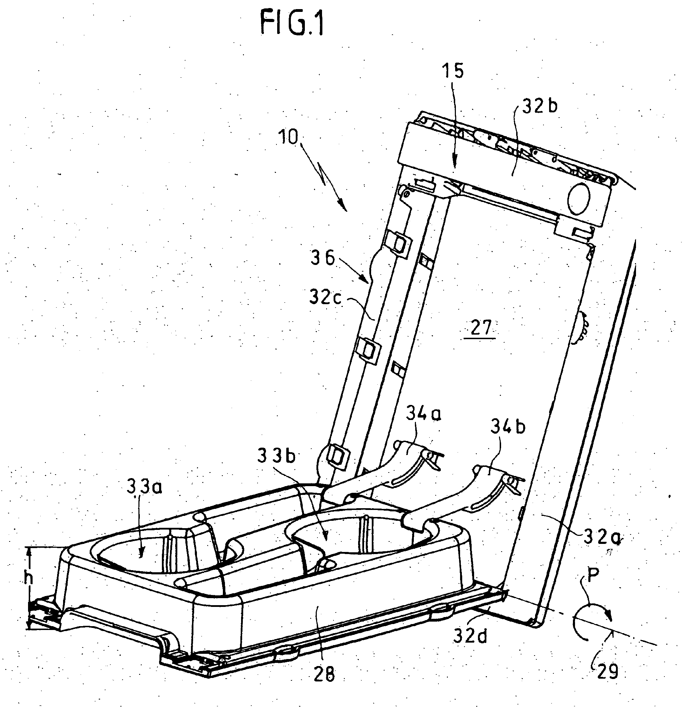

Auf der dem Aufnahmeraum 37 zugewandten Seite 30 des Deckelelementes 28 ist eine Funktionseinheit 31 angeordnet, die in Fig. 4 nur schematisch angedeutet ist. Die Fig. 1 bis 3 zeigen unterschiedliche Ausführungsbeispiele mit unterschiedlichen Funktionseinheiten.

Fig. 1 zeigt den Einbaurahmen 15 in perspektivischer Vorderansicht. Es wird deutlich, dass der Einbaurahmen 15 vier Rahmenschenkel 32a, 32b, 32c, 32d umfasst. Das Deckelelement 28 ist bei dem Ausführungsbeispiel der Fig. 1 als Becherhalter ausgebildet und weist zwei Aufnahmen 33a, 33b zur Aufnahme von Bechern, Tassen, Dosen, Flaschen od.dgl. auf. Das Deckelelement 28 ist im wesentlichen so hoch ausgebildet, wie der Innenraum 37 des Transportbehältnisses 36 breit ist. Demzufolge weist das Deckelelement 28 gemäß Fig. 1 eine Höhe h auf, die der Breite B des Transportbehältnisses 36 entspricht. Der gesamte von dem Aufnahmeraum 37 bereitgestellte Einbauplatz kann auf diese Weise optimal genutzt werden, so dass ein besonders hochbauender Becherhalter möglich wird.

Das Deckelelement 28 gemäß Fig. 1 ist um eine Schwenkachse 29 in Richtung des Pfeiles P schwenkbar an dem Einbaurahmen 15 angelenkt. An der Rückwand 27 des Transportbehältnisses 36 sind zwei Kunststofflaschen 34a, 34b befestigt, die für einen sicheren Halt des Deckelelementes 28 an der Rückwand 27 bzw. am Einbaurahmen 15 auch unter Belastung sorgen, also beispielsweise wenn Getränke in den Aufnahmen 33a, 33b angeordnet sind. Anstelle der Laschen 34a, 34b können auch vergleichbare Befestigungselemente vorgesehen sein, die alternativ zu einer Befestigung an der Rückwand 27 auch an dem Einbaurahmen 15 befestigt werden können.

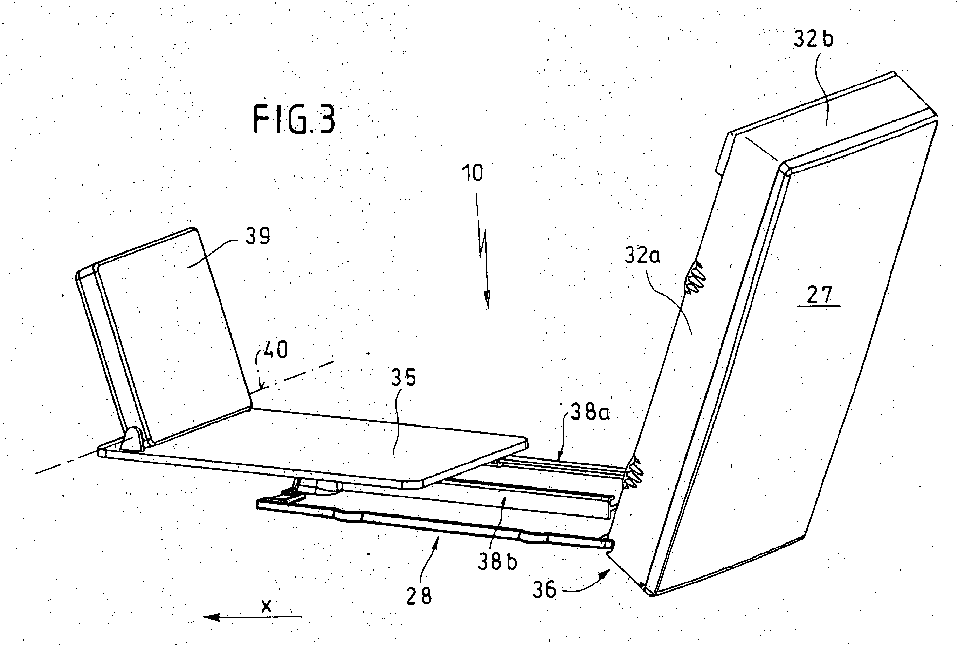

Das Ausführungsbeispiel der Fig. 3 zeigt eine erfindungsgemäße Transportbehälter-Einrichtung 10, bei der das Transportbehältnis 36 in perspektivischer Rückansicht dargestellt ist. Es sei an dieser Stelle darauf hingewiesen, dass, soweit gleiche oder vergleichbare Teile oder Elemente betroffen sind, bei den unterschiedlichen Ausführungsbeispielen gleiche Bezugszeichen verwendet wurden.

Das Deckelelement 28 ist bei dem Ausführungsbeispiel der Fig. 3 als Trägerplatte für eine Transporteinrichtung ausgebildet. Eine Montageplatte 35 ist mittels einer zwei Schienen 38a, 38b aufweisenden Verstelleinrichtung in Fahrtrichtung x des Fahrzeuges nach vorn verlagerbar. Die Montageplatte 35 kann beispielsweise eine als DVD-Player ausgebildete Funktionseinheit tragen, die in der Fig. 3 jedoch nicht dargestellt ist. Die Funktionseinheit kann beispielsweise mittels Klettband oder vergleichbaren Befestigungselementen auf der Montageplatte 35 befestigt werden.

Angedeutet ist in Fig. 3 ein Bildschirm 39, der um eine Schwenkachse 40 schwenkbar an der Montageplatte 35 angeordnet ist.

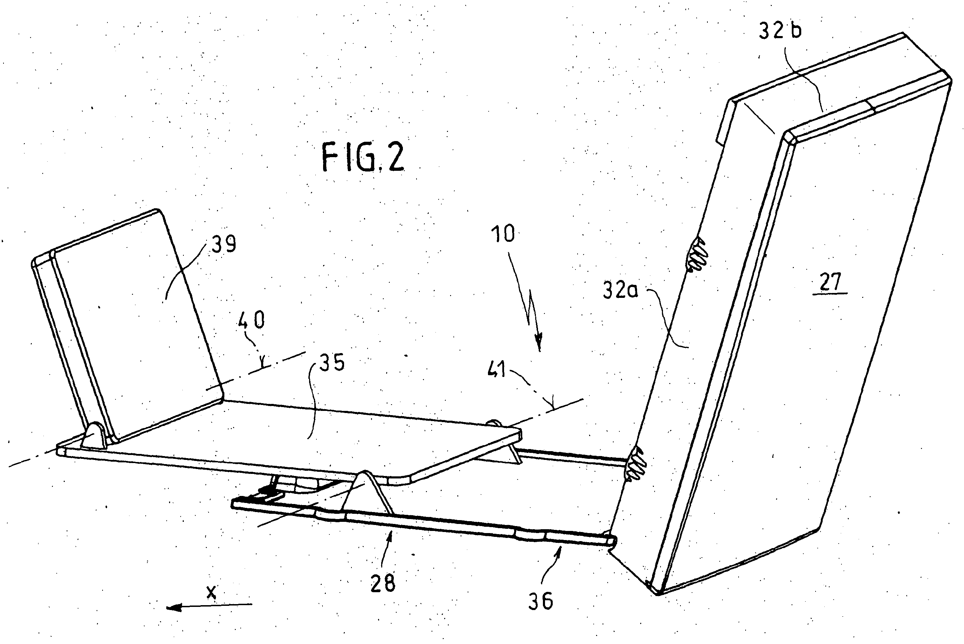

Ein viertes Ausführungsbeispiel der erfindungsgemäßen Transportbehälter-Einrichtung 10 gemäß Fig. 2 zeigt ein Transportbehältnis 36 in einer Darstellung gemäß Fig. 3, bei der eine Montageplatte 35 um eine Schwenkachse 41 schwenkbar mit dem Deckelelement 28 verbunden ist. Wiederum ist ein Bildschirm 39 schwenkbar um eine Schwenkachse 40 auf der Montageplatte 35 angeordnet. Die beispielsweise von einem DVD-Player oder einer Spielekonsole od.dgl. bereitgestellte Funktionseinheit ist auch in Fig. 2 nicht dargestellt. Der Bildschirm 39 ist jedoch wiederum Bestandteil der Funktionseinheit.

Die Ausführungsbeispiele der Fig. 2 und 3 zeigen Verstelleinrichtungen, die eine Verlagerung einer Montageplatte 35 relativ zu dem Deckelelement 28 ermöglichen. Die Montageplatte 35 kann dabei als eigentliche Trageinheit für die Funktionseinheit ausgebildet sein, so dass das Deckelelement 28 die Funktionseinheit lediglich mittelbar trägt.

Die Ausführungsbeispiele der Fig. 2 und 3 zeigen darüber hinaus jeweils eine Montageplatte 35, die eine Verlagerung der Funktionseinheit in Fahrtrichtung x des Fahrzeuges nach vorn ermöglicht. Auf diese Weise kann für einen Benutzer eine besonders komfortable Betriebsposition der Funktionseinheit erreicht werden. Beispielsweise kann ein Bildschirm 39 von den Fondsitzpassagieren bequem eingesehen werden, wenn sich dieser in der in den Fig. 2 und 3 dargestellten Gebrauchsposition befindet. Auch für den Fall, dass die Funktionseinheit beispielsweise als Spielekonsole ausgebildet ist, erscheint eine derartige Verlagerungsmöglichkeit vorteilhaft.

Gleichermaßen, auch wenn dies in den Figuren nicht dargestellt ist, kann eine derartige Verstelleinrichtung für eine Montageplatte für die Funktionseinheit oder unmittelbar für die Funktionseinheit auch eine Verlagerung in im wesentlicher vertikaler Richtung oder auch in Fahrzeugquerrichtung ermöglichen.

Die erfindungsgemäße Transportbehälter-Einrichtung ermöglicht die Bereitstellung eines Modulsystems mit nur geringem Konstruktionsaufwand, da für unterschiedliche Funktionseinheiten lediglich unterschiedliche Deckelelemente vorgesehen werden müssen. Sowohl der Einbaurahmen als auch der fahrzeugseitig fest angeordnete Halterahmen können, ohne dass eine angepasste Konstruktion erforderlich ist; für Deckelelemente mit unterschiedlichen Funktionseinheiten verwendet werden.

## Patentansprüche

1. Transportbehälter-Einrichtung (10) für Fahrzeuge, wie z. B. Durchladeeinrichtung, insbesondere für den sitzlehnen- oder kofferraumwandseitigen Einbau in Personenkraftwagen, mit einem fahrzeugfesten Halterahmen (11), der mindestens einen Einführkanal begrenzt, in den ein Einbaurahmen (15) eines Transportbehälters (36), wie eines Skisacks od. dgl., durch eine Einführöffnung des Einführkanals hindurch einsetzbar ist, wobei der Einbaurahmen (15) an dem Halterahmen (11) in einer Montageposition (Fig. 4) lösbar festlegbar ist, und wobei das Transportbehältnis (36) ein Deckelelement (38) aufweist, dem eine Funktionseinheit, wie Bildschirm, Spielkonsole, DVD-Player, Becherhalter od. dgl. zugeordnet ist.

2. Transportbehälter-Einrichtung nach Anspruch 1, **dadurch gekennzeichnet, dass** ein Innenraum (37) des Transportbehältnisses (36) von dem Deckelelement (28) verschließbar ist.
